# EUROPÄISCHE PATENTSCHRIFT

(11) **EP 0 879 800 B1**
(45) Veröffentlichungstag und Bekanntmachung des Hinweises auf die Patenterteilung: **05.04.2000**
(21) Anmeldenummer: 98108167.2
(22) Anmeldetag: 05.05.1998
(51) Int. Cl.: C03C 3/087, C03C 3/085

(54) **Aluminosilicatglas für flache Anzeigenvorrichtungen**
Aluminosilicate glass for flat display services
Verre d'aluminosilicate pour dispositifs d'affichge plates

(30) Priorität: 24.05.1997 DE 19721738
(43) Veröffentlichungstag der Anmeldung: 25.11.1998
(73) Patentinhaber: Schott Glas, 55122 Mainz (DE); Carl-Zeiss-Stiftung trading as Schott Glas, 55122 Mainz (DE)
(72) Erfinder: Brix, Peter, Dr., 55116 Mainz (DE); Linz, Wilfried, 55124 Mainz (DE)

(56) Entgegenhaltungen:
- US-A- 5 599 754
- DATABASE WPI Section Ch, Week 9549 Derwent Publications Ltd., London, GB; Class L01, AN 95-379869 XP002076104 -& JP 07 257 937 A (NIPPON SHEET GLASS CO LTD)
- PATENT ABSTRACTS OF JAPAN vol. 015, no. 177 (C-0829), 7. Mai 1991 -& JP 03 040933 A (ASAHI GLASS CO LTD), 21. Februar 1991
- PATENT ABSTRACTS OF JAPAN vol. 098, no. 005, 30. April 1998 -& JP 10 025129 A (NIPPON ELECTRIC GLASS CO LTD), 27. Januar 1998
- PATENT ABSTRACTS OF JAPAN vol. 098, no. 005, 30. April 1998 -& JP 10 025130 A (NIPPON ELECTRIC GLASS CO LTD), 27. Januar 1998
- PATENT ABSTRACTS OF JAPAN vol. 098, no. 005, 30. April 1998 -& JP 10 025128 A (NIPPON ELECTRIC GLASS CO LTD), 27. Januar 1998

## Beschreibung

Gegenstand der Erfindung ist ein Aluminosilicatglas, das für den Einsatz in der Displaytechnik geeignet ist.

Die Anforderungen an ein Glas, welches in der Displaytechnik als Substratglas für flache Anzeigevorrichtungen, speziell als Substratglas zur Herstellung von Plasma-Display-Panels (PDP) eingesetzt werden soll, sind u.a. von L.F. Weber in "Color Plasma Displays", 1996 SID International Symposium, Seminar Lecture Notes M-6, San Diego, USA, 1996 beschrieben.

Im Prinzip handelt es sich bei den bilderzeugenden Elementen nach dem PDP-Verfahren um eine Vielzahl von abgeflachten und miniaturisierten Leuchtstoffröhren: Eine Frontplatte bildet zusammen mit einer Rückplatte und den senkrecht zueinander stehenden Stegen einer Kanalplatte hermetisch abgedichtete Räume, die mit Edelgasen geringen Druckes (etwa Ne bei 66,66 kPa (500 Torr)) gefüllt sind und in denen durch Anlegung einer Spannung zwischen 200 und 300 Volt eine Glimmentladung unter Aussendung von ultraviolettem Licht abläuft. Durch Beschichtung der Innenseite der Frontplatte mit geeigneten Fluoreszenzstoffen (Phosphore) kann Licht der gewünschten Farbe erzeugt werden. Durch Zusammenfassung von je drei Bildpunkten der Grundfarben zu einem Bildelement (Pixel, Picture element) kann, analog den bekannten Farbfernsehgeräten, die auf Basis der Braunschen Röhre arbeiten, ein Farbdisplay realisiert werden. Durch die gitterartige Anordnung der Elektrodenzuführungen in Zeilen, die auf der Innenseite der Frontplatte geführt werden, und Spalten, die auf der Innenseite der Rückwand verlaufen, kann jedes Bildelement gezielt adressiert werden.

Für die Substratgläser für PDPs gelten also in materialtechnischer Hinsicht dieselben Anforderungen wie für die Röhrengläser der Leuchtstofflampen (Neonröhren). Neben der erforderlichen Transparenz des Werkstoffes ist die Anpassung des Ausdehnungsverhaltens an die verbreiteten Fluoreszenzstoffe wesentlich. Daher sollte die thermische Dehnung α_{20/300} des Glases im Bereich herkömmlicher Fenstergläser, also bei etwa 8,1 bis 9,0 x 10⁻⁶/K liegen.

Im Unterschied zu den Gläsern für gewöhnliche Neonröhren müssen die PDP-Gläser in Form großformatiger Glasscheiben herstellbar sein. Ein gängiges und vorzugsweise angewandtes Verfahren zur Herstellung von Glasscheiben ist das sog. Floatverfahren, bei dem die Glasschmelze auf ein Metallbad ausgegossen und unter Abkühlung auf etwa die Glastransformationstemperatur T_{g} in Form eines breiten Bandes abgezogen wird. Um eine Oxidation des Metallbades zu vermeiden, wird unter einer reduzierenden Schutzgasatmosphäre gearbeitet. Die Gläser dürfen daher für diese Verarbeitungsmethode keine Komponenten wie Blei-, Arsen- oder Antimonoxid enthalten, die unter den reduzierenden Bedingungen des Floatprozesses in die metallische Form umgewandelt werden und so das Glas einfärben oder trüben könnten. Gläser, die sich auf die geschilderte Art zu Glasscheiben verarbeiten lassen und diese Verfärbungen nicht zeigen, werden hier als floatbar bzw. als auf einer Floatanlage verarbeitbar bezeichnet.

Bei alkalihaltigen Schmelzen ist auch das Boroxid B₂O₃ eine kritische Glaskomponente, weil es in Form der Alkaliborate aus der Schmelze entweichen kann. Das eigentliche Problem hierbei ist nicht die Verdampfung, sondern die unkontrollierte Kondensation der Alkaliborate auf dem Glasband und die damit verbundenen Glasfehler. Eine weitere kritische Glaskomponente ist das Zinkoxid ZnO, welches ebenfalls aus der Schmelze verdampfen und wiederum unerwünschte Kondensationserscheinungen zeigen kann. Zur Vermeidung von Oberflächenglasfehlern ist es daher erwünscht, wenn PDP-Gläser auch kein B₂O₃ und ZnO enthalten.

Wegen der komplizierten Herstellung der Plasma-Display-Panels werden strenge Maßstäbe an die Formtreue des Glasteile, besonders nach mehrfacher Erwärmung mit anschließender Kühlung auf Raumtemperatur, gelegt. Denn auch bei Temperaturbehandlung unterhalb der Transformationstemperatur T_{g} können die Glasteile einen gewissen Schrumpf erleiden, der, besonders bei den großformatigen Displays, eine genaue geometrische Justierung des Gesamtverbandes verhindert. Diese auch als "Compaction" oder "Shrinkage" bekannte Glaseigenschaft sollte also möglichst gering sein. Da die Compaction nur mit großem Aufwand hinreichend genau gemessen werden kann, werden Gläser mit hoher Transformationstemperatur T_{g} bevorzugt, weil bei ihnen erfahrungsgemäß die Compaction geringer ist als bei Gläsern mit niedrigem T_{g}.

Die Transformationstemperatur sollte oberhalb von 650 °C liegen. Alternativ zum T_{g} können auch die über bestimmte Viskositäten definierten Temperaturen im unteren Temperaturbereich als Kriterium für die Eignung der Gläser als Substrate für Plasma-Display-Panels herangezogen werden: Die Temperatur für die Viskosität von 10^{14,7} dPas (entspricht in etwa dem Unteren Kühlpunkt UKP nach DIN 52312 Teil 7, ASTM 598 und ISO 7884-7) sollte dann größer als 610 °C und die Temperatur für die Viskosität von 10¹³ dPas (entspricht in etwa dem Oberen Kühlpunkt OKP nach DIN 52312 Teil 7) größer als 650 °C sein.

Die Viskositäten der Gläser im oberen Temperaturbereich haben zwar für die genannte Anwendung in der Displaytechnik keine Bedeutung, sollten aber an das gewählte Herstellungsverfahren angepaßt sein. So sollten für das Floatverfahren die Temperatur für die Viskosität von 10^{7,6} dPas (entspricht in etwa dem Erweichungspunkt EP nach DIN 52312 Teil 6) zwischen 820 und 920 °C und die Temperatur für die Viskosität von 10⁴ dPas (entspricht dem Verarbeitungspunkt VA nach DIN 52312 Teil 2) zwischen 1120 und 1270 °C.

Die Dichte der Gläser sollte insbesondere für die Verwendung als Substratglas für Anzeigevorrichtungen nicht zu groß sein, weil ansonsten die Bildwiedergabeeinheiten zu schwer werden. Dies ist besonders bei den großformatigen Displays, die wie ein Bild an die Wand gehängt werden können, von Nachteil. Die Dichte des Glases sollte also möglichst niedrig, zumindest unter 2,800 g/cm³ liegen.

Um eine gute mechanische Stabilität der Displays sicherzustellen, sollte der Elastizitäts-Modul (E-Modul) möglichst hoch, wenigstens größer als 70 GPa sein.

Auch an die chemischen Beständigkeiten von Displaygläsern werden hohe Anforderungen gestellt, weil im Herstellungsprozeß verschiedene Waschvorgänge mit unterschiedlichen Reinigungsflüssigkeiten integriert sein können. Geringe Abtragswerte erlauben die Verwendung von aggressiveren Reinigungsflüssigkeiten und damit einen schnelleren Durchsatz bei der Fertigung.

Außerdem ist äußerst wichtig und im Stand der Technik bisher nicht befriedigend gewährleistet, daß die Gläser stabil gegenüber dem Einfluß elektromagnetischer Strahlung des VIS- und des UV-Bereichs (250 - 800 nm) sind, d. h., daß sie nach Bestrahlung keine wesentliche Abnahme der Transmission im sichtbaren Wellenbereich zeigen. Nur so bleibt die Bildhelligkeit über die Lebensdauer des Displays weitgehend unverändert.

In der Patentliteratur sind bereits zahlreiche Gläser für Plasma-Displays beschrieben. Jedoch weisen diese Gläser die verschiedensten Nachteile auf und/oder erfüllen nicht alle genannten hohen Anforderungen:

Beispielsweise werden in der PCT-Anmeldung WO 96/9259 alkalifreie Gläser für Plasma-Displays beschrieben. Da Alkaliionen eine sehr hohe lonenbeweglichkeit besitzen und durch Wanderung unter dem Einfluß von Konzentrationsgradienten und elektrischen Feldern in die Begleitstoffe (Phosphore, Lotglas) eindringen und diese schlimmstenfalls verändern können, wäre unter diesem Aspekt für die genannte Verwendung die Abwesenheit von Alkalioxiden tatsächlich wünschenswert.

Um aber die geforderte hohe thermische Dehnung ohne Alkalioxide zu erzielen, werden in das Glas große Mengen an den Erdalkalioxiden BaO (25,5 - 39 Gew.-%) und SrO (10,5 - 21.5 Gew.-%) eingeführt, was zu unerwünscht schweren Gläsern (ρ ≈ 3,5 g/cm³) führt. Der Alkaliionendiffusion kann man statt dessen, wenn nötig, durch Aufbringen einer Diffusionssperre auf dem Substrat begegnen, z. B. durch Beschichtung der Glasscheiben mit Silicium- oder Titandioxid. Diese Schichten haben zudem den Vorteil, daß sie als Dielektrikum den bei der Gasentladung fließenden elektrischen Strom wirksam begrenzen können und dadurch einen Schutz vor Durchschlägen bieten.

Das für WO 96/9259 gesagte gilt auch für die alkalifreien Gläser der EP 0 729 922 A1 (14 - 31,5 Gew.-% BaO, 8 - 21,5 Gew.-% SrO).

Die deutsche Patentanschrift DE 43 09 701 C1 und die deutsche Offenlegungsschrift DE 43 03 474 A1 beschreiben bleifreie bzw. blei- und bariumfreie Kristallgläser zur Herstellung von Gläsern und Haushaltsgegenständen, wobei das jeweilige Glassystem auf einem Alkali - Kalk - Silicatglas aufgebaut ist, das TiO₂ und/oder ZrO₂ und/oder Nb₂O₅ enthält. Die Gläser sind Al₂O₃- arm oder -frei. Die chemischen Beständigkeiten dieser Gläser erfüllen nicht die hohen Anforderungen an Display-Gläser.

In JP 7-101748 A werden aluminiumarme, alkalihaltige Gläser für Plasma-Display-Panels beschrieben, die aber aufgrund der verwendeten Konzentrationen der einzelnen Alkalioxide (0,3 - 2,5 Gew.-% Li₂O; 7 - 12 Gew.-% Na₂O; 1,5 - 4,5 Gew.-% K₂O) nicht die gewünschten hohen Temperaturen im Viskositätsbereich von 10^{14,7} bis 10¹³ dPas aufweisen werden.

Auch in JP 8-133778 A werden alkalihaltige Gläser für Plasma-Displays beschrieben, die aufgrund ihrer Zusammensetzung (sie enthalten kein ZrO₂ ) nicht die gewünschten Temperaturen im Bereich von 10^{14,7} bis 10¹³ dPas aufweisen. Auch dürfte ihre Solarisationsstabilität nicht ausreichend sein.

Sowohl die japanische Offenlegung JP 3-40933 A als auch die US-Patentschrift US 5,599,754 nennen Gläser, verwendbar als Substratgläser für Plasma-Display-Panels, in denen TiO₂ lediglich fakultativer Bestandteil ist. Es kann laut der US-Schrift dazu dienen, die chemische Beständigkeit zu verbessern. Auch in diesen beiden Schriften wird die Bedeutung der Solarisationsstabilität nicht thematisiert und diese Eigenschaft nicht beschrieben. Sie kann aber nicht für alle beanspruchten Gläser ausreichend sein. Die Gläser dieser beiden Schriften enthalten hohe Gehalte an Erdalkalioxiden (Σ RO 17 - 25 Gew.- % bzw 17 - 27 Gew.- %) und dabei CaO als notwendigen Bestandteil (bis zu 12 Gew.-% im Fall der japanischen Schrift). Diese Komponente kann sich aber, insbesondere bei höheren Gehalten, negativ auf die Entglasungsstabilität der Gläser auswirken.

Auch die japanischen JP 8-290938 A und JP 8-290939 A beschreiben als Substratmaterial für Plasma-Display-Panels verwendbare Gläser mit hohem Erdalkaligehalt (Σ RO 17 - 27 Gew.- %). Die Gläser der beiden Schriften unterscheiden sich voneinander durch einen unterschiedlichen CaO-Gehalt (0 - 2,9 Gew.- % gegenüber 3 - 12 Gew.- %) bei varierenden Al₂O₃-Gehalten (2 - 15 Gew.- % bzw. 0,5 - 4,9 Gew.- %).

Weiter beschreibt JP 7-257 937 A Glaszusammensetzungen für Plasma-Display-Panels. Bei diesen Gläsern sind sowohl TiO₂ mit maximal 3 Gew.-% als auch SrO mit maximal 4 Gew.-% nur fakultative Bestandteile.

Die PCT-Anmeldung WO 96/11887 beschreibt Gläser aus einem sehr weiten Glaszusammensetzungsbereich, jedoch ohne TiO₂. Durch die nötige Beschränkung des K₂O-Gehaltes auf ≤ 9 Gew.-% können die gewünschten hohen Temperaturen für den Viskositätsbereich 10^{14,7} bis 10¹³ dPas, also die gewünschten hohen UKP und OKP, nicht bei gleichzeitiger hoher thermischer Dehnung und guter Säurebeständigkeit erreicht werden.

Es ist Aufgabe der Erfindung, ein transparentes und solarisationsstabiles Glas mit hoher Transformationstemperatur T_{g}, geringer Dichte ρ und guten chemischen Beständigkeiten zu finden, das für die Verwendung als Substratglas in der Displaytechnik, insbesondere für Plasma-Display-Panels geeignet ist. Vorzugsweise soll das Glas auf einer Floatanlage zu Scheiben verarbeitbar sein.

Diese Aufgabe wird durch das im Patentanspruch 1 beschriebene Glas gelöst.

Das Glas enthält 45 bis 68 Gew.-% SiO₂. Bei höheren Anteilen kann eine thermische Dehnung α_{20/300} von wenigsten 8,1 10⁻⁶/K nicht erreicht werden und nimmt der Verarbeitungspunkt VA sehr hohe Werte an. Bei niedrigeren Anteilen wird die chemische Beständigkeit, insbesondere die Säurebeständigkeit, schlecht. Bevorzugt wird ein SiO₂-Anteil von 48 bis 58 Gew.-%.

Der Al₂O₃-Gehalt liegt zwischen > 5 und 18 Gew.-%. Auch hier steigt bei höheren Anteilen VA stark an, während α_{20/300} zu niedrige Werte annimmt. Bei geringeren Al₂O₃-Anteilen werden die gewünschten hohen Viskositätswerte im unteren Temperaturbereich nicht erreicht und ist die Dichte nicht gering genug. Besonders bevorzugt ist ein Al₂O₃-Gehalt zwischen 9 und 15 Gew.- %.

Als Flußmittel zur Erleichterung der Schmelzbarkeit und zur Anpassung der thermischen Dehnung enthält das Glas 10 bis 20 Gew.-% der Alkalioxide Na₂O und K₂O, und zwar > 9 bis 15 Gew.-% K₂O und 0 - 5 Gew.-% Na₂O. Auf Li₂O und Cs₂O kann verzichtet werden, was aufgrund ihrer relativ hohen Rohstoffkosten und ihres negativen Einflusses auf die Kristallisationsstabilität positiv ist.
K₂O liegt im genannten Überschuß zu Na₂O oder als alleiniges Alkalioxid vor, um die gewünschten hohen Viskositätswerte im unteren Temperaturbereich und eine geringe Dichte des Glas zu ermöglichen. Bevorzugt soll das Gewichtsverhältnis Na₂O / K₂O zwischen 0 und 0,4 liegen. In einer besonders bevorzugten Ausführungsform der Erfindung betragen der Na₂O-Anteil 1 bis 4 Gew.-% und der K₂O-Anteil 9,5 bis 14 Gew.-% mit der Summe aus Na₂O und K₂O zwischen 11 und 16 Gew.-%. Das besonders bevorzugte Gewichtsverhältnis Na₂O / K₂O beträgt zwischen 0,15 und 0,35. Bei Glasschmelzen, die als Alkalioxid ausschließlich K₂O oder K₂O in zu großem Überschuß zu Na₂O enthalten, kann es nämlich in ungünstigen Fällen zu einer verstärkten Auflösung der Feuerfestmaterialien kommen. Auch haben kaliumreiche Gläser einen niedrigeren E-Modul als natriumreiche Gläser.
Auf B₂O₃ kann vollständig verzichtet werden.

Ein wesentlicher Glasbestandteil sind die Erdalkalioxide. Um die Transformationstemperatur und den Oberen Kühlpunkt auf möglichst hohe Werte bei gleichzeitig hoher Dehnung anzuheben, sollte die Summe aus CaO, SrO und BaO zwischen 8 und < 17 Gew.-% liegen.
Die genannten Erdalkalioxide sind untereinander teilweise austauschbar. So können CaO und BaO mit 0 bis 10 Gew.-% vorliegen, während SrO mit 4,8 bis < 17 Gew.-% ständiger Bestandteil der Gläser ist, da diese Komponente gegenüber CaO Vorteile in der Entglasungsstabilität der Gläser und gegenüber BaO den Vorteil der geringeren Dichte der Gläser aufweist. MgO soll nicht oder höchstens in Spuren vorhanden sein, da MgO-haltige Gläser gegenüber vergleichbaren CaO-haltigen Gläsern eine geringere chemische Beständigkeit, eine geringere Entglasungsstabilität und niedrigere Obere und Untere Kühlpunkte aufweisen. Außerdem hebt MgO, wieder verglichen mit CaO, die thermische Dehnung weniger stark an, so daß zur Erzielung derselben Wirkung, d. h. der hohen thermischen Dehnung, auch noch etwa die doppelte Menge an MgO mit seinen Nachteilen nötig wäre.

In einer bevorzugten Ausführungsform der Erfindung beträgt der CaO-Gehalt der Gläser zwischen 2 und 10 Gew.-% bei einem SrO-Anteil von 4,8 bis 14 Gew.-% und einem BaO-Anteil von 0 - 10 Gew.-%; die Summe der drei Erdalkalioxide soll zwischen 8 und < 17 Gew.-% betragen.

Diese Gläser mit hohen CaO-Gehalten zeigen vorteilhaft, eine sehr gute Säurebeständigkeit, eine niedrige Dichte und einen hohen Elastizitätsmodul; sie können aber unter Umständen eher anfällig gegen Entglasung sein. Daher wird in einer anderen bevorzugten Ausführungsform der Erfindung der CaO-Gehalt auf 0 - < 3 Gew.-% beschränkt bei Anteilen von 9,5 bis < 17 Gew.-% SrO und 0 - < 7,5 Gew.-% BaO, wobei die Summe der drei Erdalkalioxide zwischen 12 und < 17 Gew.-% liegen sollte.

In einer besonders bevorzugten Ausführungsform der Erfindung wird auf CaO völlig verzichtet. Der SrO-Gehalt soll dann zwischen 9,5 und 15 Gew.-%, der BaO-Gehalt zwischen 0 und < 7,5 Gew.-% betragen. Die Summe aus SrO und BaO beträgt < 17 Gew.- %. Diese hoch SrO-haltigen Gläser sind sehr entglasungsstabil und besitzen auch noch niedrige Dichten und gute Säurebeständigkeiten.

Weiter enthalten die erfindungsgemäßen Gläser ZrO₂, und zwar im Bereich von 1 bis 6 Gew.-%. ZrO₂ erhöht die Transformationstemperatur T_{g} und verbessert die Laugenbeständigkeit. Bei höheren Anteilen würde jedoch die hydrolytische Beständigkeit verschlechtert und die thermische Dehnung zu gering. Auch könnten aufgrund der schlechten Schmelzbarkeit der ZrO₂-Rohstoffe Glasfehler auftreten. Bevorzugt ist ein ZrO₂-Gehalt von 2 - 5 Gew.-%.

Ein Bestandteil von besonderer Bedeutung ist TiO₂. Es verbessert insbesondere die hydrolytische Beständigkeit, aber auch die Beständigkeiten gegenüber Säure, Lauge und gepufferter Flußsäurelösung werden positiv beeinflußt. Verglichen mit den anderen Netzwerkbildnern SiO₂, Al₂O₃ und ZrO₂, führt es zu einer höheren thermischen Dehnung, einem höheren E-Modul, einem kleineren Verarbeitungspunkt und einer geringeren Entglasungsneigung. Besonders wesentlich ist jedoch die durch TiO₂ bewirkte drastische Verbesserung der Solarisationsbeständigkeit. Dadurch werden Gläser erhalten, die bei Verwendung als Substratgläser für Anzeigevorrichtungen eine weitgehend unveränderliche Bildhelligkeit gewährleisten. Zur Erzielung einer ausreichenden Wirkung sollte der Gehalt an TiO₂ mindestens 0,2 Gew.-% betragen. Ein begrenzender Faktor für den Maximal-Gehalt an TiO₂ ist eine unerwünschte Braunfärbung bei hohen TiO₂-Anteilen, die durch die Bildung eines Ti-Fe-Farbkomplexes bewirkt wird. Diese Färbung kann durch die Verwendung eisenarmer Rohstoffe und durch die Vermeidung von Eisenkontaminationen im Schmelzprozeß, beispielsweise indem auf die Wiederverwendung von Eigenscherben, die nach Zerkleinerung mit einem Scherbenbrecher zusätzlich Eisen enthalten, verzichtet wird, unterdrückt werden. Ein TiO₂-Anteil von bis zu 5 Gew.-% ist möglich, aus Kostengründen wird jedoch, insbesondere für Massenprodukte, der TiO₂-Gehalt vorzugsweise auf bis zu 3 Gew.-% beschränkt. Besonders bevorzugt ist ein Gehalt im Bereich zwischen 0,5 und 2 Gew.-%.

Zusätzlich zu den bereits genannten Glasbestandteilen können auch noch eine oder mehrere Komponenten aus der Gruppe La₂O₃, Ta₂O₅, Nb₂O₅ und Y₂O₃ im Glasvorhanden sein. Sie können jeweils mit einem Anteil von bis 5 Gew.-% vorhanden sein, sollen jedoch auch in der Summe 5 Gew.-% nicht überschreiten. Diese Komponenten können eine Absenkung der thermischen Dehnung und eine Verbesserung der Kristallisationsbeständigkeit und der chemischen Resistenz bewirken. Aufgrund ihrer hohen Rohstoffkosten wird auf ihre Verwendung jedoch meist verzichtet, da die genannten Eigenschaften i.a. auch mit preiswerteren Bestandteilen die geforderte hohe Güte erreichen.

Zur Verbesserung der Glasqualität können dem Gemenge zur Läuterung des Glases ein oder mehrere an sich bekannte Läuterungsmittel in den üblichen Mengen zugegeben werden.
Verzichtet man nun auf die Verwendung von As₂O₃ und Sb₂O₃, was ohne Verluste in Bezug auf die Glasqualität möglich ist, können die Gläser nach dem eigentlichen Schmelzvorgang auf einer Floatanlage zu Scherben weiterverarbeitet werden, da sie keine leicht reduzierbaren Bestandteile aufweisen, insbesondere neben As₂O₃ und Sb₂O₃ auch kein PbO.

Die gute Glasqualität, insbesondere die gute Oberflächenqualität, wird auch dadurch bewirkt, daß die Gläser frei von B₂O₃ und ZnO sind.

In einer weiteren bevorzugten Ausführungsform wird die gute Glasqualität durch die Zugabe von 0,1 bis 2 Gew.-% Alkalihalogeniden (vorzugsweise NaCl oder KCI) als Läutermittel erreicht. Die nach der Läuterung im Glas verbleibenden Mengen sind aufgrund der Wirkungsweise dieser Läutermittel viel kleiner.

Das erfindungsgemäße Glas weist die folgenden vorteilhaften Eigenschaften auf: Es besitzt
- eine thermische Dehnung α_{20/300} zwischen 8,1 und 9,0 10⁻⁶/K (an die konventionellen Phosphore angepaßt)
- eine Transformationstemperatur > 650 °C (verbesserte Formbeständigkeit nach Temperaturbehandlung)
- eine relativ geringe Dichte (ρ < 2,800 g/cm³)
- eine gute Entglasungsstabilität
- eine gute chemische Beständigkeit, insbesondere eine gute Säurebeständigkeit
- eine sehr gute Solarisationsstabilität
und es ist in bevorzugter Ausführungsform auf einer Floatanlage zu Scheiben verarbeitbar.

Damit ist das erfindungsgemäße solarisationsstabile Glas hervorragend geeignet für die Verwendung als Substratglas in der Displaytechnik, insbesondere zur Herstellung von Plasma-Display-Panels. Seine Verwendungsmöglichkeiten sind natürlich nicht auf diesen Bereich beschränkt. So ist es beispielsweise aufgrund seiner besonderen Eigenschaften ebenfalls hervorragend für die Verwendung als Substratglas für Sonnenkollektoren geeignet.

### Beispiele:

Aus herkömmlichen Rohstoffen sowie mit dem Zusatz von 0,3 Gew.-% NaCl bzw. KCI als Läutermittel wurden Gläser in induktiv beheizten Platintiegeln bei 1550 °C erschmolzen, die Schmelze wurde anderthalb Stunden bei dieser Temperatur geläutert und danach 30 Minuten zur Homogenisierung gerührt. Die Temperatur wurde für 30 Minuten auf 1580 °C erhöht, dann wieder auf 1550 °C gesenkt und wieder für 30 Minuten gehalten. Aus dem eingesetzten Chlorid verbleiben etwa 0,02 Gew.-% im Glas, was in der nachstehenden Tabelle nicht aufgeführt ist.

Die Tabellen zeigen in den Beispielen 1 bis 4 erfindungsgemäße Gläser mit ihren Zusammensetzungen (Tabelle 1) und ihren wichtigsten Eigenschaften (Tabelle 2). Beispiel 5 stellt ein TiO₂-freies Vergleichsbeispiel dar. Es verdeutlicht die Bedeutung des TiO₂-Gehaltes insbesondere für die Solarisationsstabilität, eine der erfindungswesentlichen Eigenschaften.

Die Solarisationsstabilität wird folgendermaßen angegeben: Glasplättchen mit einer Dicke von 1 mm wurden mit einer UV-Quecksilberdampf-Entladungslampe HOK-4 der Firma Philips mit einer Leistungsaufnahme von 400 W aus einem Abstand von 7 cm 15 Stunden lang bestrahlt. Dabei ist die Differenz der Transmissionswerte vor und nach der Bestrahlung bei einer Wellenlänge von etwa 350 nm am ausgeprägtesten. Diese Transmissionsabnahme bei 350 nm wird als Solarisation bezeichnet. Sie soll möglichst gering sein und höchstens 5 % betragen.

Die verschiedenen chemischen Beständigkeiten werden folgendermaßen angegeben: Allseits polierte Glasplättchen der Abmessungen 70 mm x 50 mm x 2 mm werden für die angegebene Zeitdauer bei der angegebenen Temperatur mit der jeweiligen Lösung behandelt, und der Gewichtsverlust (Abtragswert) wird bestimmt und in mg/cm² angegeben.
- - H₂O:: Behandlung mit Wasser für 24 Stunden bei 95 °C.
Der Abtragswert sollte 0,1 mg/cm² möglichst nicht überschreiten.
- - HCI:: Behandlung mit 5 %iger Salzsäure für 24 Stunden bei 95 °C.
Der Abtragswert sollte 0,5 mg/cm² möglichst nicht überschreiten.
- - NaOH:: Behandlung mit 5 %iger Natronlauge für 6 Stunden bei 95 °C.
Der Abtragswert sollte 1,0 mg/cm² möglichst nicht überschreiten.
- - NH₄F ∗ HF:: Behandlung mit 10 %iger gepufferter Flußsäurelösung für 20 Minuten bei Raumtemperatur.
Hier sollte der Abtragswert 7 mg/cm² möglichst nicht überschreiten.

Als Kenngrößen für die Kristallisationsneigung (Entglasungsneigung) bzw. - stabilität sind die Obere Entglasungsgrenze (Liqudustemperatur) OEG, die maximale Kristallwachstumsgeschwindigkeit vₘₐₓ sowie die Temperatur bei vₘₐₓ, die Temperatur des maximalen Kristallwachstums Kgₘₐₓ angegeben.

Die Temperaturen für die Viskositäten 10^{14,7} dPas, 10¹³ dPas, 10^{7,6} dPas, 10⁴ dPas und 10² dPas sind in der Tabelle als L14,7; L 13; L 7,6; L4 und L2 bezeichnet.

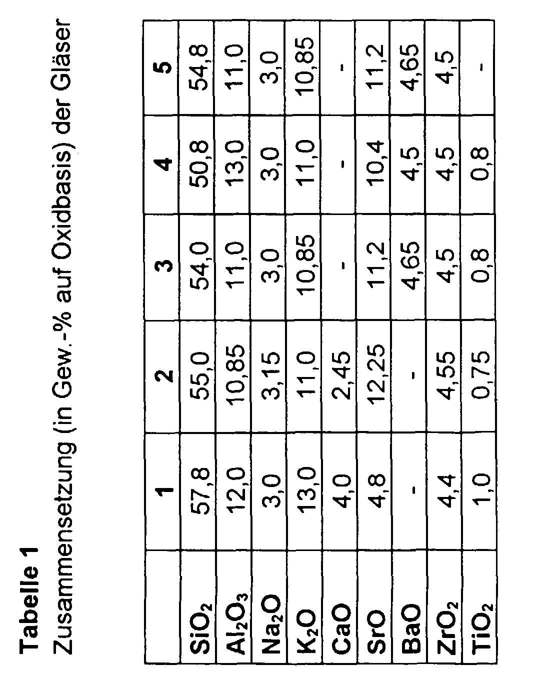

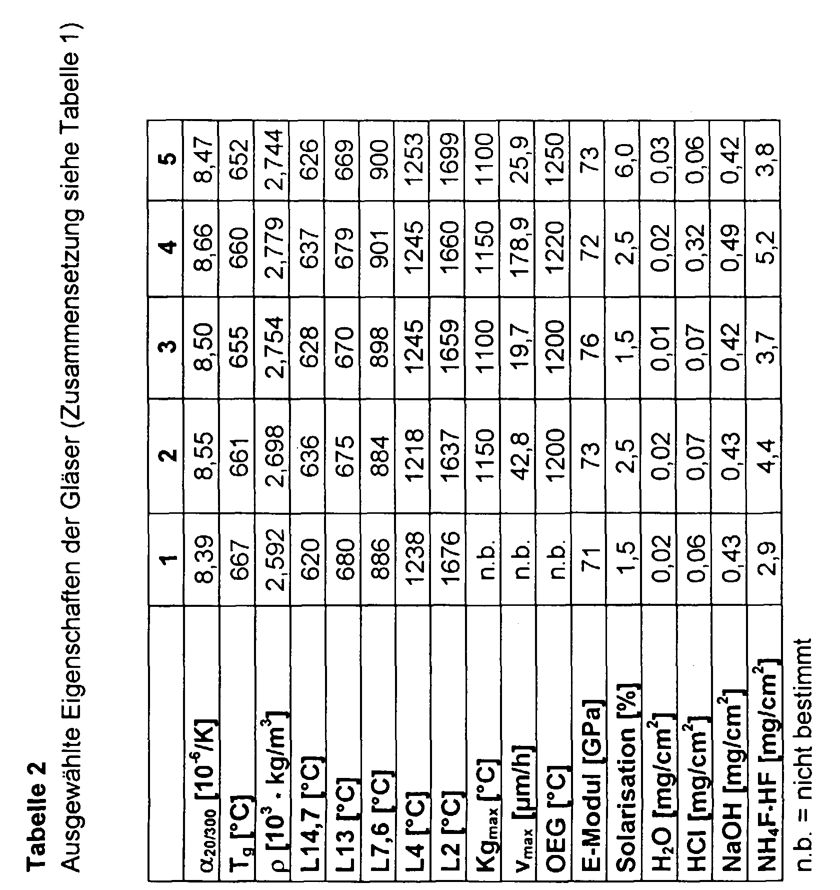

## Patentansprüche

1. Solarisationsstabiles Aluminosilicatglas, das folgende Zusammensetzung (in Gew.-% auf Oxidbasis) aufweist:
| | |
|---|---|
| SiO₂ | 45 - 68 |
| Al₂O₃ | > 5 - 18 |
| Na₂O | 0 - 5 |
| K₂O | > 9 - 15 |
| mit Na₂O + K₂O | ≥ 10 |
| CaO | 0 - 10 |
| SrO | 0,5 - < 17 |
| BaO | 0 - 10 |
| mit CaO + SrO + BaO | 8 - < 17 |
| ZrO₂ | 1 - 6 |
| TiO₂ | 0,2 - 5 |
sowie ggf. Läutermittel in den üblichen Mengen,
wobei MgO nicht oder höchstens in Spuren vorhanden ist.

2. Aluminosilicatglas nach Anspruch 1,
**dadurch gekennzeichnet**,
daß das Gewichtsverhältnis Na₂O / K₂O höchstens 0,4 beträgt.

3. Aluminosilicatglas nach Anspruch 1 oder 2,
**gekennzeichnet durch**
folgende Zusammensetzung (in Gew.-% auf Oxidbasis):
| | |
|---|---|
| SiO₂ | 45 - 68 |
| Al₂O₃ | > 5 - 18 |
| Na₂O | 0 - 5 |
| K₂O | > 9 - 15 |
| mit Na₂O + K₂O | ≥ 10 |
| CaO | 2 - 10 |
| SrO | 0,5 - 14 |
| BaO | 0 - 10 |
| mit CaO + SrO + BaO | 8 - < 17 |
| ZrO₂ | 1 - 6 |
| TiO₂ | 0,2 - 3 |
sowie ggf. Läutermittel in den üblichen Mengen.

4. Aluminosilicatglas nach Anspruch 1 oder 2,
**gekennzeichnet durch**
folgende Zusammensetzung (in Gew.-% auf Oxidbasis):
| | |
|---|---|
| SiO₂ | 45 - 68 |
| Al₂O₃ | > 5 - 18 |
| Na₂O | 0 - 5 |
| K₂O | > 9 - 15 |
| mit Na₂O + K₂O | ≥ 10 |
| CaO | 0 - < 3 |
| SrO | 9,5 - < 17 |
| BaO | 0 - < 7,5 |
| mit CaO + SrO + BaO | 12 - < 17 |
| ZrO₂ | 1 - 6 |
| TiO₂ | 0,2 - 3 |
sowie ggf. Läutermittel in den üblichen Mengen.

5. Aluminosilicatglas nach wenigstens einem der Ansprüche 1, 2, 4,
**gekennzeichnet durch**
folgende Zusammensetzung (in Gew.-% auf Oxidbasis):
| | |
|---|---|
| SiO₂ | 48 - 58 |
| Al₂O₃ | 9 - 15 |
| Na₂O | 1 - 4 |
| K₂O | 9,5 - 14 |
| mit Na₂O +K₂O | 11 - 16 |
| SrO | 9,5 - 15 |
| BaO | 0 - < 7,5 |
| mit SrO + BaO | < 17 |
| ZrO₂ | 2 - 5 |
| TiO₂ | 0,5 - 2 |
sowie ggf. Läutermittel in den üblichen Mengen.

6. Aluminosilicatglas nach wenigstens einem der Ansprüche 1 bis 5,
**dadurch gekennzeichnet**,
daß das Gewichtsverhältnis Na₂O / K₂O zwischen 0,15 und 0,35 beträgt.

7. Auf einer Floatanlage verarbeitbares Aluminosilicatglas nach wenigstens einem der Ansprüche 1 bis 6,
**dadurch gekennzeichnet,**
daß es bis auf unvermeidliche Verunreinigungen frei von PbO, As₂O₃, Sb₂O₃, ZnO, MgO, B₂O₃ ist.

8. Aluminosilicatglas nach wenigstens einem der Ansprüche 1 bis 7,
**dadurch gekennzeichnet**,
daß es zusätzlich bis zu insgesamt 5 Gew.-% einer oder mehrerer Komponenten aus der Gruppe La₂O₃ , Ta₂O₅, Nb₂O₅ , Y₂O₃ enthält.

9. Aluminosilicatglas nach wenigstens einem der Ansprüche 1 bis 8,
das eine Transformationstemperatur T_{g} von über 650 °C, eine Dichte p von weniger als 2,800 g/cm³ und einen thermischen Ausdehnungskoeffizienten α_{20/300} zwischen 8,1 und 9,0 x 10⁻⁶/K aufweist.

10. Verwendung des solarisationsstabilen Aluminosilicatglases nach wenigstens einem der Ansprüche 1 bis 9 als Substratglas in der Displaytechnik.

11. Verwendung des solarisationsstabilen Aluminosilicatglases nach wenigstens einem der Ansprüche 1 bis 9 als Substratglas zur Herstellung von Plasma-Display-Panels.

12. Verwendung des solarisationsstabilen Aluminosilicatglases nach wenigstens einem der Ansprüche 1 bis 9 als Substratglas für Sonnenkollektoren.

## Claims

1. Solarization-stable aluminosilicate glass having the following composition (in % by weight, based on oxide):
| | |
|---|---|
| SiO₂ | 45 - 68 |
| Al₂O₃ | > 5 - 18 |
| Na₂O | 0 - 5 |
| K₂O | > 9 - 15 |
| where Na₂O + K₂O | ≥ 10 |
| CaO | 0 - 10 |
| SrO | 4.8 - < 17 |
| BaO | 0 - 10 |
| where CaO + SrO + BaO | 8 - < 17 |
| ZrO₂ | 1 - 6 |
| TiO₂ | 0.2 - 5 |
and, if desired, refining agents in conventional amounts,
MgO not being present or being present at most in traces.

2. Aluminosilicate glass according to Claim 1,
**characterized in that**
the Na₂O/K₂O weight ratio is at most 0.4.

3. Aluminosilicate glass according to Claim 1 or 2,
**characterized by**
the following composition (in % by weight, based on oxide):
| | |
|---|---|
| SiO₂ | 45 - 68 |
| Al₂O₃ | > 5 - 18 |
| Na₂O | 0 - 5 |
| K₂O | > 9 - 15 |
| where Na₂O + K₂O | ≥ 10 |
| CaO | 2 - 10 |
| SrO | 4.8 - 14 |
| BaO | 0 - 10 |
| where CaO + SrO + BaO | 8 - < 17 |
| ZrO₂ | 1 - 6 |
| TiO₂ | 0.2 - 3 |
and, if desired, refining agents in conventional amounts.

4. Aluminosilicate glass according to Claim 1 or 2,
**characterized by**
the following composition (in % by weight, based on oxide):
| | |
|---|---|
| SiO₂ | 45 - 68 |
| Al₂O₃ | > 5 - 18 |
| Na₂O | 0 - 5 |
| K₂O | > 9 - 15 |
| where Na₂O + K₂O | ≥ 10 |
| CaO | 0 - < 3 |
| SrO | 9.5 - < 17 |
| BaO | 0 - < 7.5 |
| where CaO + SrO + BaO | 12 - < 17 |
| ZrO₂ | 1 - 6 |
| TiO₂ | 0.2 - 3 |
and, if desired, refining agents in conventional amounts.

5. Aluminosilicate glass according to at least one of Claims 1, 2 and 4,
**characterized by**
the following composition (in % by weight, based on oxide):
| | |
|---|---|
| SiO₂ | 48 - 58 |
| Al₂O₃ | 9 - 15 |
| Na₂O | 1 - 4 |
| K₂O | 9.5 - 14 |
| where Na₂O + K₂O | 11 - 16 |
| SrO | 9.5 - 15 |
| BaO | 0 - < 7.5 |
| where SrO + BaO | < 17 |
| ZrO₂ | 2 - 5 |
| TiO₂ | 0.5 - 2 |
and, if desired, refining agents in conventional amounts.

6. Aluminosilicate glass according to at least one of Claims 1 to 5,
**characterized in that**
the Na₂O/K₂O weight ratio is between 0.15 and 0.35.

7. Aluminosilicate glass according to at least one of Claims 1 to 6, which can be processed in a float unit,
**characterized in that**
it is, apart from unavoidable contaminants, free from PbO, As₂O₃, Sb₂O₃, ZnO, MgO and B₂O₃.

8. Aluminosilicate glass according to at least one of Claims 1 to 7,
**characterized in that**
it additionally contains up to a total of 5% by weight of one or more components from the group consisting of La₂O₃, Ta₂O₅, Nb₂O₅ and Y₂O₃.

9. Aluminosilicate glass according to at least one of Claims 1 to 8 which has a glass transition temperature T_{g} of above 650°C, a density ρ of less than 2.800 g/cm³ and a coefficient of thermal expansion α_{20/300} of between 8.1 and 9.0 × 10⁻⁶/K.

10. Use of the solarization-stable aluminosilicate glass according to at least one of Claims 1 to 9 as substrate glass in display technology.

11. Use of the solarization-stable aluminosilicate glass according to at least one of Claims 1 to 9 as substrate glass for the production of plasma display panels.

12. Use of the solarization-stable aluminosilicate glass according to at least one of Claims 1 to 9 as substrate glass for solar collectors.

## Revendications

1. Verre d'aluminosilicate stable à la solarisation, qui présente la composition suivante (en % en poids sur base d'oxyde) :
| | |
|---|---|
| SiO₂ | 45 - 68 |
| Al₂O₃ | > 5 - 18 |
| Na₂O | 0 - 5 |
| K₂O | > 9 - 15 |
| avec Na₂O + K₂O | ≥ 10 |
| CaO | 0 - 10 |
| SrO | 4,8 - < 17 |
| BaO | 0 - 10 |
| avec CaO + SrO + BaO | 8 - < 17 |
| ZrO₂ | 1 - 6 |
| TiO₂ | 0,2 - 5 |
ainsi que, le cas échéant, un agent d'affinage dans les quantités usuelles, MgO n'étant pas présent, ou présent tout au plus, en traces.

2. Verre d'aluminosilicate suivant la revendication 1, caractérisé en ce que le rapport pondéral Na₂O/K₂O s'élève tout au plus à 0,4.

3. Verre d'aluminosilicate suivant la revendication 1 ou 2, caractérisé par la composition suivante (en % en poids sur base d'oxyde) :
| | |
|---|---|
| SiO₂ | 45 - 68 |
| Al₂O₃ | > 5 - 18 |
| Na₂O | 0 - 5 |
| K₂O | > 9 - 15 |
| avec Na₂O + K₂O | ≥ 10 |
| CaO | 2 - 10 |
| SrO | 4,8 - 14 |
| BaO | 0 - 10 |
| avec CaO + SrO + BaO | 8 - < 17 |
| ZrO₂ | 1 - 6 |
| TiO₂ | 0,2 - 3 |
ainsi que, le cas échéant, un agent d'affinage dans les quantités usuelles.

4. Verre d'aluminosilicate suivant la revendication 1 ou 2, caractérisé par la composition suivante (en % en poids sur base d'oxyde) :
| | |
|---|---|
| SiO₂ | 45 - 68 |
| Al₂O₃ | > 5 - 18 |
| Na₂O | 0 - 5 |
| K₂O | > 9 - 15 |
| avec Na₂O + K₂O | ≥ 10 |
| CaO | 0 - < 3 |
| SrO | 9,5 - < 17 |
| BaO | 0 - < 7,5 |
| avec CaO + SrO + BaO | 12 - < 17 |
| ZrO₂ | 1 - 6 |
| TiO₂ | 0,2 - 3 |
ainsi que, le cas échéant, un agent d'affinage dans les quantités usuelles.

5. Verre d'aluminosilicate suivant au moins l'une des revendications 1, 2, 4, caractérisé par la composition suivante (en % en poids sur base d'oxyde) :
| | |
|---|---|
| SiO₂ | 48 - 58 |
| Al₂O₃ | 9 - 15 |
| Na₂O | 1 - 4 |
| K₂O | 9,5 - 14 |
| avec Na₂O + K₂O | 11 - 16 |
| SrO | 9,5 - 15 |
| BaO | 0 - < 7,5 |
| avec SrO + BaO | < 17 |
| ZrO₂ | 2 - 5 |
| TiO₂ | 0,5 - 2 |
ainsi que, le cas échéant, un agent d'affinage dans les quantités usuelles.

6. Verre d'aluminosilicate suivant au moins l'une des revendications 1 à 5, caractérisé en ce que le rapport pondéral Na₂O/K₂O s'élève entre 0,15 et 0,35.

7. Verre d'aluminosilicate transformable sur une installation pour verre flotté suivant au moins l'une des revendications 1 à 6, caractérisé en ce qu'il est exempt de PbO, As₂O₃, Sb₂O₃, ZnO, MgO, B₂O₃ à l'exception d'inévitables impuretés.

8. Verre d'aluminosilicate suivant au moins l'une des revendications 1 à 7, caractérisé en ce qu'il contient en plus jusqu'à un total de 5 % en poids de l'un ou plusieurs des composants du groupe La₂O₃, Ta₂O₅, Nb₂O₅, Y₂O₃.

9. Verre d'aluminosilicate suivant au moins l'une des revendications 1 à 8, qui présente une température de transformation Tg de plus de 650°C, une densité ρ de moins de 2800 g/cm³ et un coefficient de dilatation thermique α_{20/300} entre 8,1 et 9,0 x 10⁻⁶/K.

10. Utilisation du verre d'aluminosilicate stable à la solarisation suivant au moins l'une des revendications 1 à 9 comme verre de substrat dans la technique d'affichage.

11. Utilisation du verre d'aluminosilicate stable à la solarisation suivant au moins l'une des revendications 1 à 9 comme verre de substrat pour la fabrication de panneaux d'affichage à plasma.

12. Utilisation du verre d'aluminosilicate stable à la solarisation suivant au moins l'une des revendications 1 à 9 comme verre de substrat pour des collecteurs solaires.
